Europäisches Patentamt

(19) European Patent Office

Office européen des brevets

(11) Numéro de publication: **0 447 337 A1**

(12) # DEMANDE DE BREVET EUROPEEN

(21) Numéro de dépôt: 91450005.3

(22) Date de dépôt: 13.03.91

(51) Int. Cl.⁵: **H02J 9/06**

(30) Priorité: 13.03.90 FR 9003441

(43) Date de publication de la demande:
18.09.91 Bulletin 91/38

(84) Etats contractants désignés:
BE CH DE ES GB IT LI NL

(71) Demandeur: CID CERCLE INNOVATION
DEVELOPPEMENT, SOCIETE A
RESPONSABILITE LIMITEE
24 rue de l'Ouaille
F-17137 Nieul sur Mer (FR)

(72) Inventeur: Cercle, Loic
24 rue de l'Ouaille
F-17137 Nieul sur Mer (FR)
Inventeur: Bleque, Jean-Yves
Chemin de la Bezardière
F-53410 Saint Ouen des Toits (FR)

(74) Mandataire: Thébault, Jean-Louis
Cabinet Thébault S.A. 1 Allées de Chartres
F-33000 Bordeaux (FR)

(54) **Dispositif de sauvegarde du bon fonctionnement d'un appareil électrique en cas de défaillance du réseau d'alimentation électrique.**

(57) — L'invention concerne un dispositif de sauvegarde du bon fonctionnement d'un appareil électrique en cas de défaillance du réseau d'alimentation électrique, caractérisé en ce qu'il comprend une source d'énergie électrique de secours (5 ; 11 à 13) connectable, aux lieu et place du réseau d'alimentation électrique (2), aux bornes de l'appareil à sauvegarder (1 ; 10), par l'intermédiaire d'un circuit de commutation (3,4) et un circuit de commande (6 ; 14) relié audit circuit de commutation, comportant une première entrée (6a) reliée à un circuit (7) de détection de la disparition dudit réseau et une seconde entrée (6b) reliée à un circuit (8) délivrant un signal en réponse à un ordre de mise en service dudit appareil électrique, ledit circuit de commande (6 ; 14) agissant sur ledit circuit de commutation de façon à connecter ladite source de secours à l'appareil seulement dans le cas où sont présents simultanément à ses entrées un signal de disparition du réseau et un signal de mise en service de l'appareil.
— Application à la sauvegarde du bon fonctionnement d'appareils électriques.

EP 0 447 337 A1

FIG.1.

## DISPOSITIF DE SAUVEGARDE DU BON FONCTIONNEMENT D'UN APPAREIL ELECTRIQUE EN CAS DE DEFAILLANCE DU RESEAU D'ALIMENTATION ELECTRIQUE

La présente invention a trait à un dispositif de sauvergarde du bon fonctionnement d'un appareil électrique en cas de défaillance du réseau d'alimentation électrique et, plus précisément, à un dispositif qui soit capable, en cas de sollicitation par un utilisateur dudit appareil, de suppléer à la défaillance dudit réseau.

L'invention s'applique notamment, la description qui va suivre faisant référence à cette application, à la sauvegarde d'un portail à commande électrique, mais il est bien entendu que l'invention peut s'appliquer à tout appareil ou dispositif alimenté en énergie électrique à partir d'un réseau de distribution et qu'il convient, en cas de sollicitation, de maintenir en état de fonctionner lorsque le réseau normal d'alimentation se trouve défaillant.

A cet effet, l'invention a pour objet un dispositif de sauvegarde du bon fonctionnement d'un appareil électrique en cas de défaillance du réseau d'alimentation électrique, caractérisé en ce qu'il comprend une source d'énergie électrique de secours connectable, aux lieu et place du réseau d'alimentation électrique, aux bornes de l'appareil à sauvegarder, par l'intermédiaire d'un circuit de commutation et un circuit de commande relié audit circuit de commutation, comportant une première entrée reliée à un circuit de détection de la disparition dudit réseau et une seconde entrée reliée à un circuit délivrant un signal en réponse à un ordre de mise en service dudit appareil électrique, ledit circuit de commande agissant sur ledit circuit de commutation de façon à connecter ladite source de secours à l'appareil seulement dans le cas où sont présents simultanément à ses entrées un signal de disparition du réseau et un signal de mise en service de l'appareil.

Dans une situation de défaillance du réseau, un tel dispositif est de nature à opérer une commutation automatique sur la source de secours, mais uniquement dans le cas où un ordre de mise en service de l'appareil est donné, sinon la commutation n'est pas opérée et, à laisser l'appareil branché sur le secteur dans tout autre cas de figure, à savoir : présence du secteur avec ordre ou non de mise en service de l'appareil ou bien absence du secteur et également d'ordre de mise en service de l'appareil.

On va maintenant décrire plus en détail le principe du dispositif de l'invention ainsi qu'un mode de réalisation appliqué à la sauvegarde d'une commande électrique de portail.

Cette description est donnée à titre d'exemple uniquement et en regard du dessin annexé sur lequel :
  – Figure 1 est un schéma électrique simplifié illustrant le principe du dispositif de l'invention,

et
  – Figure 2 est un schéma de principe d'un dispositif selon l'invention appliqué à un portail à commande électrique d'ouverture et fermeture.

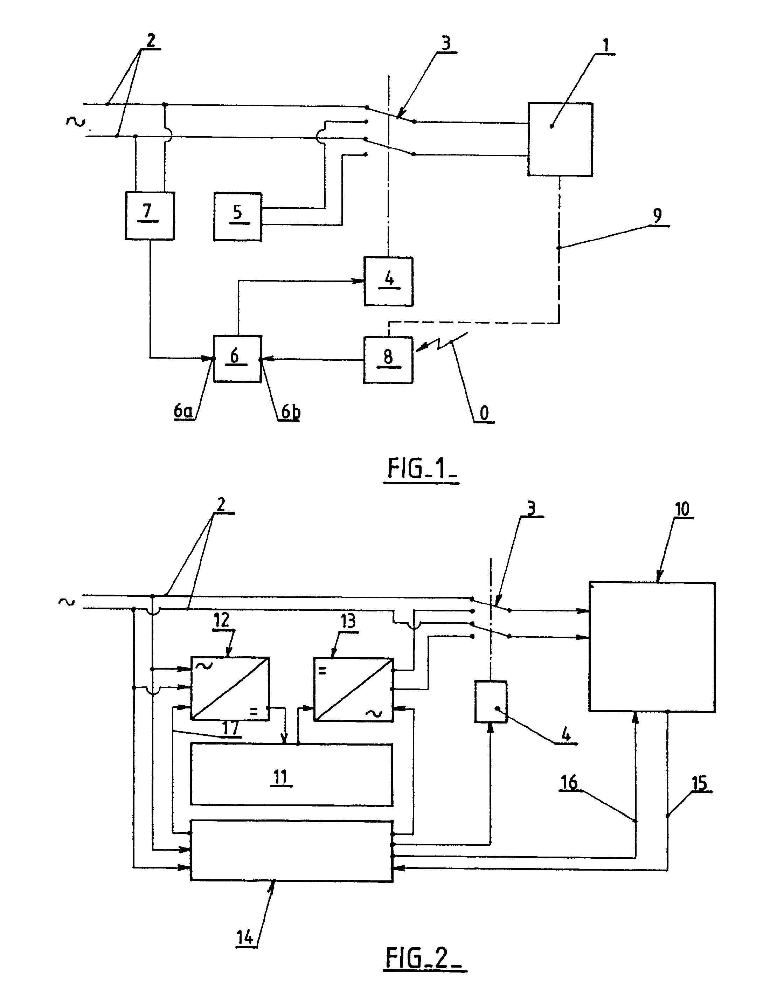

La figure 1 est une simple illustration du principe général du dispositif de l'invention.

On a représenté en 1 un appareil électrique quelconque alimenté normalement en énergie électrique à partir d'un réseau de distribution ou secteur alternatif 2, par l'intermédiaire d'un contacteur 3 actionné par une bobine de commande 4.

En 5 est représentée une source de courant électrique alternatif de secours apte à suppléer au secteur 2. La référence 6 désigne un circuit de commande de la bobine du contacteur 4, lequel comporte une entrée 6a reliée à un circuit 7 de détection de la disparition de la tension sur le secteur 2 et une entrée 6b reliée à un circuit 8 délivrant un signal lors de l'envoi d'un signal O de mise en service de l'appareil 1. Ce dernier est un appareil électrique quelconque tel que, par exemple, moteur, appareil vidéo ou audio, appareil ménager, etc...

La source 5 est évidemment appropriée à la fourniture d'un courant électrique acceptable par l'appareil 1.

Le circuit 7 est chargé de détecter toute disparition de la tension disponible sur le réseau 2, ou la chute de cette tension en dessous d'un seuil déterminé et de délivrer, en réponse à une telle détection, un signal envoyé sur l'entrée 6a du circuit 6. Une telle fonction est banale et peut être réalisée de bien des manières connues de l'homme du métier sans qu'il soit nécessaire de donner davantage de précision.

Le circuit 8 est chargé, en réponse à un signal O donné par l'utilisateur pour faire fonctionner ou mettre en service l'appareil 1, d'engendrer un signal envoyé sur l'entrée 6b du circuit 6.

L'ordre O peut être envoyé à l'appareil 1, ainsi qu'au circuit 8, de bien des manières, par exemple par une liaison électrique, par voie hertzienne, par ultrasons ou infrasons, par voie lumineuse ou électromagnétique et, là aussi, l'homme du métier saura utiliser, sans autres explications, la solution appropriée à l'application envisagée et réaliser le circuit 8 appropriée à la transformation du signal d'ordre O reçu en un signal compatible avec le circuit 6.

Ce circuit 6 a en fait une fonction de porte logique générant et envoyant un signal de commande à la bobine 4 du contacteur 3, seulement dans le cas où les deux entrées 6a, 6b sont toutes les deux dans un état correspondant, d'une part, à la disparition de la tension normale sur le réseau 2 et, d'autre part, à la présence d'un ordre de mise en service de l'appareil 1.

Le circuit 8 peut être intégré dans l'appareil 1 ou être constitué par l'un des circuits de celui-ci dans la mesure où le signal généré est utilisable directement par le circuit 6.

Le circuit 7 délivre un signal en réponse à la disparition du secteur et la réapparition de ce dernier supprime ledit signal et fait revenir l'entrée 6a à l'état initial. Le circuit 6 réagit aussitôt et désexcite la bobine 4 qui commande la remise du contacteur 3 dans la position normale de branchement de l'appareil 1 sur le secteur.

Le retour à l'état initial sur l'entrée 6b s'effectue à la suite de la réception soit d'un nouvel ordre, cette fois de mise hors service de l'appareil 1, soit d'un signal de fin de fonctionnement émanant de l'appareil qui peut être relié directement à cet effet au circuit 8 comme symbolisé par la liaison 9.

Le circuit 6 peut assumer également différentes autres fonctions, de contrôle et de sécurité notamment, comme on va l'exposer maintenant en se reportant à la figure 2 qui illustre une application de l'invention à la commande d'un moteur électrique 10 actionnant un portail (non représenté).

Sur cette figure 2, on a représenté en 11 une batterie d'accumulateurs électriques chargée par un chargeur 12 branché sur le secteur alternatif 2 et alimentant un onduleur 13 fournissant du courant alternatif aux lieu et place du secteur et relié au contacteur 3. En 14 est symbolisée une carte de commande reliée au secteur 2, au chargeur 12, à l'onduleur 13, à la bobine 4 et au moteur 10 par une liaison 15 de réception d'ordre de mise en service et par une liaison 16 d'alimentation électrique auxiliaire du système 10.

La carte 14 regroupe, outre les fonctions assurées par les circuits 6,7 et 8 de la figure 1, l'électronique de commande du chargeur 12 et de l'onduleur 13 ainsi qu'un certain nombre de fonctions complémentaires qui vont être explicitées ci-après.

Le fonctionnement du dispositif de la figure 2 est le suivant.

Lorsque le réseau 2 fournit la tension normale, le dispositif est en veille et recharge, sous la commande de la carte 14, la batterie ou surveille son niveau de charge, le système 10, qu'il soit en fonctionnement ou en repos, étant branché sur le réseau.

Lorsque le réseau 2 est défaillant, la carte 14, selon l'une desdites fonctions complémentaires, alimente en électricité sous basse-tension, par l'intermédiaire de la liaison 16, le système 10 pour lui conserver ses fonctionalités d'origine (commande d'ouverture et fermeture du portail, surveillance, alarmes, etc...).

Si, en période de défaillance du réseau 2, la carte 14 reçoit, par la liaison 15, un ordre émanant du système 10, consécutif par exemple à une commande d'ouverture du portail, quelle que soit la manière dont l'ordre est transmis entre l'utilisateur et le système 10, ladite carte 14 active l'onduleur 13 en même temps qu'elle excite la bobine 4 qui fait basculer le contacteur 3 dans son autre position. L'onduleur 13 alimente alors le système 10.

Une fois le portail ouvert, ou une fois le cycle ouverture puis fermeture automatique effectué, un contact de fin de course (non représenté) sollicite, par la liaison 15, la carte 14 de façon à rebasculer le contacteur 3 dans sa position de branchement sur le réseau, même si ce dernier n'est pas rétabli. Si le réseau 2 n'est pas rétabli, un nouvel ordre de commande du portail, par exemple pour sa fermeture ou pour un nouveau cycle ouverture-fermeture, refera passer le conctateur 3 dans la position onduleur.

Dès le retour du réseau, la carte 14 commande le basculement du contacteur 3 dans la position secteur et recharge ou surveille la batterie 11.

En cas d'absence du secteur et d'atteinte par la batterie 11 d'un seuil critique de charge, la carte 14 déclenche une alarme, provoque l'ouverture ou la fermeture du portail selon la ou les conditions de sécurité fixées par le cahier des charges et attend le retour du secteur pour réactiver la fonction recharge et surveillance de batterie (assurée par la liaison 17).

On n'a pas représenté sur la figure 2 les connexions assurant les fonctions complémentaires d'alarme et de sécurité de la carte 14.

La carte 14 peut également surveiller la puissance consommée par le système 10 et, en cas d'augmentation anormale (fixée par un seuil réglable), commander l'émission d'un signal d'alerte, l'arrêt de l'alimentation en courant de la partie puissance du système 10, ou la mise de ce dernier dans un état déterminé selon le cahier des charges et qui sera conservé jusqu'à une nouvelle sollicitation de la commande.

Enfin, l'invention n'est évidemment pas limitée au mode de réalisation représenté et décrit ci-dessus mais en couvre au contraire toutes les variantes notamment en ce qui concerne la nature du système électrique 10, la nature de la source électrique de secours ainsi que la technologie de réalisation de la carte de commande 14 dans la mesure où l'on met en oeuvre la fonction de commande telle qu'illustrée par les circuits 6 à 8 de la figure 1 ainsi que d'éventuelles fonctions complémentaires, notamment de contrôle et de sécurité.

**Revendications**

1. Dispositif de sauvegarde du bon fonctionnement d'un appareil électrique en cas de défaillance du réseau d'alimentation électrique, caractérisé en ce qu'il comprend une source d'énergie électrique de secours (5;11 à 13) connectable, aux lieu et place du réseau d'alimentation électrique (2), aux bornes de l'appareil à sauvegarder (1;10), par l'intermédiaire d'un circuit de commutation (3,4) et un circuit de commande (6;14) relié audit circuit de commutation, comportant une première entrée (6a) reliée à un circuit (7) de détection de la disparition dudit réseau et une seconde entrée (6b) reliée à un circuit (8) délivrant un signal en réponse à un ordre (O) de mise en service dudit appareil électrique, ledit circuit de commande (6;14) agissant sur ledit circuit de commutation de façon à connecter ladite source de secours à l'appareil seulement dans le cas où sont présents simultanément à ses entrées un signal de disparition du réseau et un signal de mise en service de l'appareil.

2. Dispositif suivant la revendication 1, caractérisé en ce que ledit circuit de commande est constitué par une carte de commande (14) regroupant les fonctions desdits circuits de détection (7) de la disparition du réseau et de délivrance (8) d'un signal en réponse à un ordre de mise en service de l'appareil électrique (10).

3. Dispositif suivant la revendication 2, caractérisé en ce que la source de secours est une batterie (11) alimentant un onduleur (13) et chargée par un chargeur (12) lui-même contrôlée par ladite carte de commande (14).

4. Dispositif suivant la revendication 2 ou 3, caractérisé en ce que ladite carte de commande (14) assure également des fonctions complémentaires de contrôle et sécurité du fonctionnement de l'appareil électrique (10).

FIG.1

FIG.2

Office européen
des brevets

**RAPPORT DE RECHERCHE EUROPEENNE**

Numero de la demande

EP 91 45 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 683 198 (H. THODE)<br>* colonne 2, ligne 31 - colonne 3, ligne 12 @ colonne 4, lignes 4 - 26; figures 1, 2 *<br>--- | 1-4 | H 02 J 9/06 |
| Y | DE-A-2 743 957 (ESB INC)<br>* page 9, ligne 19 - page 10, ligne 19; figure 1 *<br>--- | 1-4 | |
| A | US-A-3 614 535 (K. APEL)<br>* colonne 1, ligne 70 - colonne 2, ligne 36; figures 1, 2 *<br>--- | 1 | |
| A | US-A-4 797 667 (G. PAPPAS)<br>* colonne 2, ligne 66 - colonne 4, ligne 68; figures 1-5 *<br>----- | 1 | |

**DOMAINES TECHNIQUES RECHERCHES (Int. Cl.5)**

H 02 J
E 05 F

Le présent rapport a été établi pour toutes les revendications

| Lieu de la recherche | Date d'achèvement de la recherche | Examinateur |
|---|---|---|
| LA HAYE | 10-05-1991 | HELOT H.V. |